# EUROPÄISCHE PATENTSCHRIFT

(11) **EP 3 538 300 B1**
(45) Veröffentlichungstag und Bekanntmachung des Hinweises auf die Patenterteilung: **30.12.2020**
(21) Anmeldenummer: 17804077.0
(22) Anmeldetag: 03.11.2017
(51) Int. Cl.: B22F 3/105, B29C 64/153, B29C 64/245, B29C 64/393, B33Y 10/00, B33Y 30/00, B33Y 50/02, G06T 1/00

(54) **POSITIONIEREN EINER BAUPLATTFORM IN EINER PULVERBETTVORRICHTUNG ZUR GENERATIVEN FERTIGUNG**
POSITIONING OF A BUILDING PLATE IN A POWDER BED ADDITIVE MANUFACTURING APPARATUS
POSITIONNEMENT D'UNE PLAQUE SUPPORT DANS UN APPAREIL DE FABRICATION PAR MÉTHODE ADDITIVE À BASE DE POUDRES

(30) Priorität: 11.11.2016 DE 102016121673
(43) Veröffentlichungstag der Anmeldung: 18.09.2019
(73) Patentinhaber: Trumpf Laser- und Systemtechnik GmbH, 71254 Ditzingen (DE)
(72) Erfinder: PIEGER, Markus, 73240 Wendlingen am Neckar (DE); BUCHBINDER, Damien, 12487 Berlin (DE); SCHAAL, Frederik, 70734 Fellbach (DE)
(74) Vertreter: Grättinger Möhring von Poschinger Patentanwälte Partnerschaft mbB
(86) Internationale Anmeldenummer: PCT/EP2017/078138
(87) Internationale Veröffentlichungsnummer: WO 2018/086995

(56) Entgegenhaltungen:
- DE-A1-102014 014 888
- DE-A1-102014 213 888
- US-A1- 2016 175 935

## Beschreibung

Die vorliegende Erfindung betrifft eine Vorrichtung zur laserbasierten generativen Fertigung und insbesondere ein Konzept für die Nivellierung einer Bauplattform für die Bereitstellung einer entsprechend nivellierten Pulverfläche für einen nachfolgenden Fertigungsvorgang. Ferner betrifft die Erfindung ein Verfahren zum Erzeugen eines Steuersignals zur Positionierung eines in der Höhe verfahrbaren Trägers einer Fertigungsvorrichtung.

Die laserbasierte generative Fertigung von, insbesondere metallischen oder keramischen, Werkstücken basiert auf einem Verfestigen eines auf einer Bauplattform, z.B. in Pulverform vorliegenden, Ausgangsmaterials durch die Bestrahlung mit Laserlicht. Dieses Konzept - auch als selektives Laserschmelzen (SLM) oder als Pulverbettfusion bekannt - wird unter anderem in Maschinen für den (metallischen) 3D-Druck eingesetzt. Eine beispielhafte Maschine zur generativen Fertigung von dreidimensionalen Produkten mittels sogenanntem selektiven Laserschmelzen (SLM: selective laser melting) ist in der europäischen Patentanmeldung EP 2 732 890 A2 der Sisma S.p.A. offenbart. Die Vorteile der generativen Fertigung sind allgemein eine einfache Herstellung von komplexen und individuell erstellbaren Teilen. Dabei können insbesondere definierte Strukturen im Innenraum und/oder kraftflussoptimierte Strukturen realisiert werden.

Bei der laserbasierten generativen Fertigung wird die Bauplattform (auch als Substratplatte bezeichnet) üblicherweise parallel zur Arbeitsoberfläche, d.h. im Wesentlichen horizontal, ausgerichtet. Die Ausrichtung und Nulllage kann manuell z.B. durch Auflegen eines Lineals/ Haarwinkels im kalten Zustand ermittelt und entsprechend eingestellt werden. Bei aufgeheizter Bauplattform steht dieses Vorgehen im Konflikt zu Aspekten der Arbeitssicherheit. Ferner ist aus DE 10 2014 014888 A1 ein Verfahren zum Erkennen einer Dejustage einer auf einem höhenverfahrbaren Träger positionierten Platte bekannt. Das Verfahren basiert auf einem optischen strukturellen Muster, das auf der Platte vorgesehen ist. Das Muster wird mit einer Kameravorrichtung bei einem wiederholten Abziehen von Pulverschichten erfasst und mit Referenzmustern verglichen, um Informationen zur Nachjustage der Ausrichtung des höhenverfahrbaren Trägers zu gewinnen.

US 2016/175935 A1 beschreibt eine Vorrichtung zur generativen Herstellung eines Bauteils, die eine Ausgleichseinrichtung aufweist, die dazu ausgebildet ist, anhand der Querschnittsgeometrie eines Hochenergiestrahls eine Fokusfläche des Hochenergiestrahls zu ermitteln und zu prüfen, ob eine Abweichung zwischen einer Baufläche und der Fokusfläche des Hochenergiestrahls vorliegt, um in Abhängigkeit der Prüfung die Baufläche und die Fokusfläche zueinander auszurichten.

Ferner ist aus DE 10 2014 213888 A1 eine Vorrichtung zum Herstellen eines dreidimensionalen Objekts durch schichtweises Verfestigen von Aufbaumaterial mit einer Justiereinrichtung bekannt.

Einem Aspekt dieser Offenbarung liegt die Aufgabe zugrunde, eine Detektion von Verkippung und/oder Nullposition einer Bauplattform einer SLM-Maschine bereitzustellen, insbesondere auch bei Betriebsparametern wie z.B. bei aufgeheizter Bauplattform.

Zumindest eine dieser Aufgaben wird gelöst durch ein Verfahren nach Anspruch 1 zum Erzeugen eines Steuersignals zur Positionierung eines in der Höhe bezüglich einer Arbeitsfläche verfahrbaren Trägers einer Fertigungsvorrichtung und durch eine Fertigungsvorrichtung zur generativen Fertigung eines dreidimensionalen Bauteils aus einem Pulver nach Anspruch 13. Weiterbildungen sind in den Unteransprüchen angegeben.

In einem Aspekt weist ein Verfahren zum Erzeugen eines Steuersignals zur Positionierung eines in der Höhe bezüglich einer Arbeitsfläche verfahrbaren Trägers einer Fertigungsvorrichtung zur generativen Fertigung eines dreidimensionalen Bauteils aus einem Pulver die folgenden Schritte auf: Anordnen der Bauplattform auf dem Träger, Erfassen einer Mehrzahl von Bildern der Arbeitsfläche im Bereich des Trägers, wobei vor dem Erfassen eines der Mehrzahl von Bildern eine bildspezifische Höhe des Trägers eingestellt und je nach Änderungsrichtung in der Höhe eine Pulverschicht aufgetragen oder abgetragen wird, Bestimmen eines Pulvergrenzverlaufs zwischen einem von Pulver befreiten Bereich und einem von Pulver bedeckten Bereich der Bauplattform für mindestens zwei der Mehrzahl von Bildern, die für unterschiedlich eingestellte bildspezifische Höhen des Trägers erfasst wurden, und Erzeugen eines Steuersignals zur Positionierung des Trägers basierend auf den mindestens zwei Pulvergrenzverläufen.

In einem weiteren Aspekt weist eine Fertigungsvorrichtung zur generativen Fertigung eines dreidimensionalen Bauteils aus einem Pulver einen eine Arbeitsfläche bereitstellenden Fertigungsraum, der einen Plattformbereich umfasst, einen Bauzylinder, der einen in der Höhe verfahrbaren Träger aufweist, auf dem das dreidimensionale Bauteil auf einer Oberfläche einer Bauplattform schichtweise hergestellt werden soll, eine Ausrichtvorrichtung zum Positionieren des Trägers bezüglich der Arbeitsfläche, eine Schiebevorrichtung zum Be- und/oder Entschichten von Pulver im Plattformbereich, eine Bilderzeugungsvorrichtung zur Gewinnung von Bilddaten des Plattformbereichs und eine Steuerungseinheit, die zum Empfangen der Bilddaten mit der Bilderzeugungsvorrichtung und zum Einstellen der Höhe und der Ausrichtung des Trägers mit der Ausrichtvorrichtung verbunden ist, auf, wobei die Steuerungseinheit ferner zum Auswerten der Bilddaten nach dem zuvor zusammengefassten Verfahren und insbesondere zum Erzeugen und Ausgeben eines Steuersignals zur Positionierung des Trägers basierend auf den mindestens zwei Pulvergrenzverläufen ausgebildet ist.

In einem weiteren Aspekt weist ein Verfahren zum Ausrichten einer Oberfläche einer auf einem verfahrbaren Träger angeordneten Bauplattform einer wie z.B. zuvor zusammengefassten Fertigungsvorrichtung zur generativen Fertigung eines dreidimensionalen Bauteils aus einem Pulver die folgenden Schritte auf: Empfangen eines gemäß dem zuvor zusammengefassten Verfahren erzeugten Steuersignals zur Positionierung des Trägers und Ausrichten des Trägers gemäß dem Steuersignal.

Die hierin offenbarten Konzepte basieren allgemein auf einem iterativen Be-/ oder Entschichten der Bauplattform, insbesondere um eine zu erwartende Nulllage (in Z-Richtung), mit Pulver und einem Aufnehmen von Bildern der Pulverschicht mit einer Kamera. Zur Bestimmung der Verkippung und der Nulllage (Offset) der Bauplattform werden die Bilder mittels einer Bildverarbeitung ausgewertet, bei der z.B. eine Pulverabrisslinie für die aufgenommenen Bilder bestimmt (insbesondere errechnet) wird.

Die hierin offenbarten Konzepte sind unabhängig von strukturellen Mustern, da allein das Auf- und/oder Abtragverhalten des Pulvers mit einem Beschichter ausgewertet wird. Insbesondere kann so lange Pulver ab getragen oder aufgetragen werden, bis ein Teil der Bauplattform komplett von Pulver befreit ist. Dabei bildet sich eine z.B. linienförmige Übergangszone zwischen pulverbedeckter Bauplattform und pulverfreier Bauplattform aus, die es erlaubt, die Richtung einer Verkippung der Substratplatte zu ermitteln. Je nachdem unter welchem Winkel die Bauplattform schräg steht, wandert bei einer Höhenänderung der Bauplattform eine erneut erzeugte linienförmige Übergangszone mehr oder weniger weit in der Ebene der Bauplattform. Mit wiederholten Höhenänderungen und Be- bzw. Entschichtungsvorgängen (d.h. Auf- und/oder Abtragsvorgängen von Pulver, bei denen jeweils eine neue Pulverschicht aufgetragen oder eine obere Pulverschicht entfernt wird), wandert die Übergangslinie zwischen "pulverbedeckt" und "pulverfrei" über die Plattform. Entsprechend kann zusätzlich zur Kipprichtung der Plattform auch ein Kippwinkel der Plattform aus der Höhenänderung und der gewanderten Entfernung ermittelt werden. Die Parameter Kipprichtung und Kippwinkel erlauben unter anderem eine automatisierte Ansteuerung einer den Träger/die Bauplattform tragenden Ausrichtvorrichtung, so dass die Bauplattform insbesondere parallel zur Arbeitsoberfläche eingestellt werden kann.

Zur Durchführung der hierin offenbarten Konzepte sind insbesondere Beschichter geeignet, die die Ausbildung der linienförmigen Übergangszone möglichst wenig beeinflussen. Dies sind z.B. Bürstenbeschichter oder Beschichter mit weichen Beschichterlippen.

Vorteile der hierin offenbarten Konzepte umfassen eine Unabhängigkeit von speziellen (zur Sensorik kalibrierten) Mustern auf Substratplatten. Ferner können z.B. linienförmige Übergangszonen meist deutlich einfacher ermittelt werden, als ein durch eine Pulverschicht teilweise abgedecktes Muster. Des Weiteren ist eine Erkennung und eine Differenzierung zwischen einer Pulveroberfläche bzw. einer blanken (pulverfreien) Bauplattform relativ unabhängig von optischen Bedingungen wie einer vorliegenden Ausleuchtung.

Allgemein sind die hier offenbarten Konzepte mit einer kostengünstigen und bauraumsparenden Ausführung von Sensorik umsetzbar und sind auch bei hohen Bauplattformtemperaturen einsetzbar. So benötigen die hierin offenbarten Konzepte keine zusätzlichen konventionellen Abstandssensoren, vermeiden damit Kosten und schränken den Bauraum nicht unnötig ein.

Ferner lassen sich die hierin offenbarten Konzepte leicht bei SLM-Maschinen mit Kamerabasierter Pulverbettüberwachung nachrüsten, da bis auf eine angepasste Steuerungseinheit mit entsprechend ergänzter Bildverarbeitungssoftware keine zusätzlichen Komponenten benötigt werden.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig.1: eine schematische räumliche Darstellung einer beispielhaften generativen Fertigungsvorrichtung,
- Fig. 2: eine schematische Schnittansicht der generativen Fertigungsvorrichtung aus Fig. 1 parallel zur XY-Ebene durch den Fertigungsraum,
- Fig. 3: eine schematische Schnittansicht der generativen Fertigungsvorrichtung aus Fig. 1 parallel zur XZ-Ebene durch den Fertigungsraum wie in Fig. 2 angedeutet,
- Figuren 4A bis 4C: eine Sequenz von drei Höhenstellungen eines Detektionsvorgangs,
- Fig. 5A bis 5F: Bilder des Plattformbereichs 17A bei sechs Höhenstellungen,
- Fig. 6: eine schematische Nachzeichnung des Bildes der Fig. 5D und
- Fig. 7: ein Flussdiagramm zum Verdeutlichen der hierin offenbarten Verfahren.

Hierin beschriebene Aspekte basieren zum Teil auf der Erkenntnis, dass eine Detektion der Nulllage und der Ausrichtung einer Bauplattform als zwingende Voraussetzung für eine weitere Automatisierung von LMF-Anlagen notwendig sein kann, um beispielsweise einen automatischen Start einer generativen Fertigung (Baujobstart) auszulösen. Insbesondere wurde erkannt, dass sich die Ausrichtung einer Bauplattform (insbesondere deren Verkippung zur Horizontalen) im Erscheinungsbild einer teilweise mit Pulver bedeckten Bauplattform widerspiegelt und insbesondere zu einer definierten und Bauplattform-abhängigen, z.B. für plane Bauplattformoberflächen linienförmigen, Übergangszone zwischen pulverbedeckten und pulverfreien Bereichen führt.

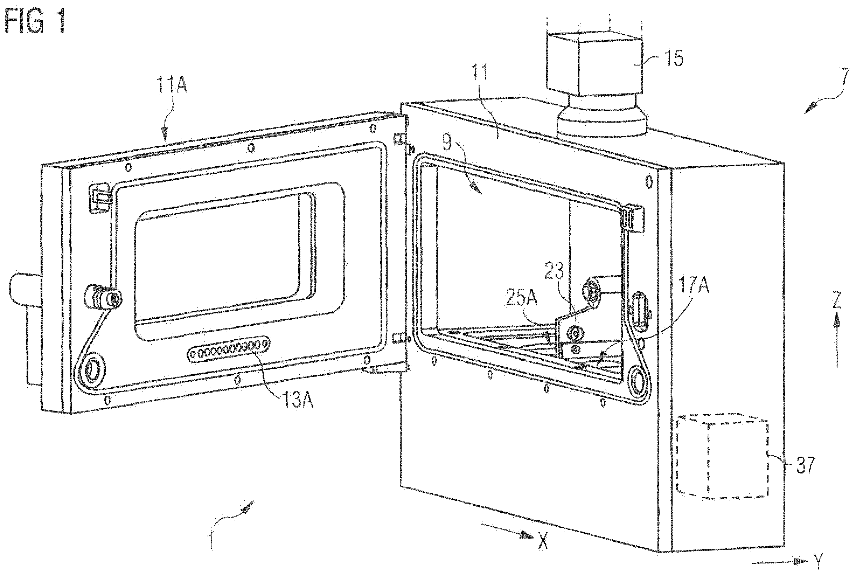

Die Figuren 1 bis 3 zeigen eine beispielhafte generative Fertigungsvorrichtung 1 zur additiven Erzeugung eines dreidimensionalen Bauteils 3 aus einem pulverförmigen Material (allgemein Pulver 5) in einer perspektivischen Ansicht sowie in schematischen Schnittansichten von oben bzw. von vorne. Zum Fertigungsvorgang wird auf die eingangs erwähnte EP 2 732 890 A2 verwiesen.

Die Fertigungsvorrichtung 1 umfasst ein Gehäuse 7, das einen Fertigungsraum 9 bereitstellt. Über eine Tür 11A in einer Vorderwand 11 besteht Zugang zum Fertigungsraum 9. Das Gehäuse 7 umfasst ferner ein Schutzgasabsaugsystem mit z.B. Auslassöffnungen 13A zum Fluten des Fertigungsraums 9 mit inertem Gas sowie Absaugöffnungen 13B. Ein Strömungsverlauf ist beispielhaft mit Pfeilen 13 angedeutet. Ein beispielsweise oberhalb des Gehäuses angebrachtes Bestrahlungssystem 15 ist zur Erzeugung von Laserlicht, welches das Pulver 5 zu Materialschichten eines 3D-Bauteils 3 verschmilzt, ausgebildet.

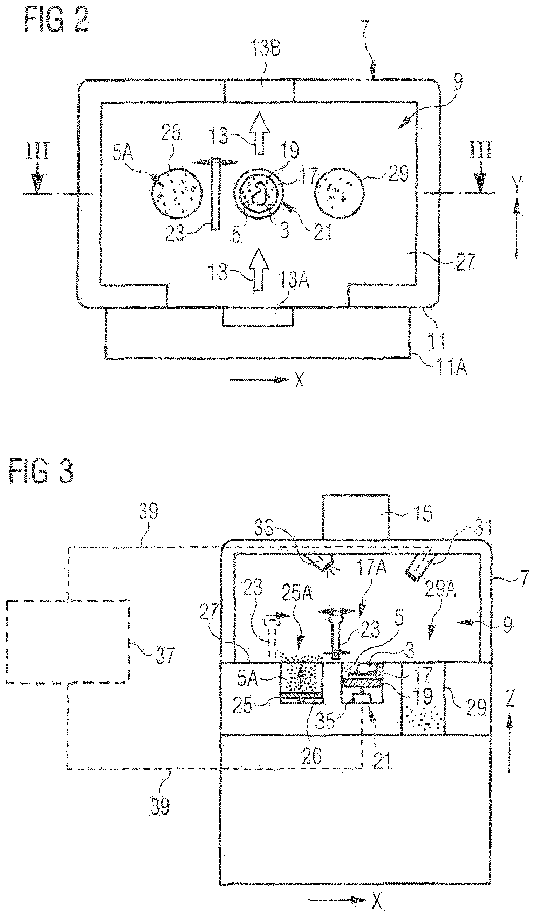

Der Fertigungsvorgang findet auf einer Arbeitsfläche 27 statt, die den Boden des Fertigungsraums 9 bildet und einen Plattformbereich 17A, einen Vorratsbereich 25A und einen Pulversammelbereich 29A aufweist. Der Fertigungsvorgang erfolgt auf einer Bauplattform 17, die im Plattformbereich 17A z.B. zentral vor der Tür 15A angeordnet ist. Die Bauplattform 17 liegt auf einem Träger 19 auf, der in einem Bauzylinder 21 in der Höhe (in Fig. 3 in ±Z-Richtung) verfahren werden kann. Der Vorratsbereich 25A dient der Bereitstellung von frischem Pulver 5A, das zur lagenweisen Herstellung des 3D-Bauteils 3 in den Bauplattformbereich 23A mit einem Beschichter 23 übertragen wird.

Auf der Bauplattform 17 wird ein mit beispielsweise metallischem oder keramischem Pulver gefülltes Pulverbett zur Bestrahlung mit dem Laserlicht von oben vorbereitet. Wie in den Figuren 1 bis 3 gezeigt wird, dient der Beschichter 23 (oft auch Schieber oder Wischer genannt) zum Verteilen des Pulvers 5 in X-Richtung während des Herstellungsprozesses. Während des Beschichtens streicht ein unterer Bereich des Beschichters 23 über die Arbeitsfläche 27, nimmt Pulver mit und befüllt dadurch z.B. bzgl. der Arbeitsfläche abgesenkte Bereiche. In diesen Bereichen definiert der untere Bereich des Beschichters 23 das Niveau der Pulveroberfläche. Z.B. wird frisches Pulver 5, das in einem im Vorratsbereich 25A vorgesehenen Vorratszylinder 25 bereitgestellt wird, mit dem Beschichter 23 über die Arbeitsfläche 27 in den Plattformbereich 17A verschoben, wo es sich im Bereich der abgesenkten Bauplattform 17 sammelt und dieser entsprechend beschichtet wird. Nicht benötigtes Pulver wird beispielsweise in einen im Pulversammelbereich 29A vorgesehenen Sammelzylinder 29 gebracht. Beim Entschichten kann der Beschichter 23 eine Schicht Pulver von der zuvor angehobenen Bauplattform durch Darüberstreichen entfernen.

Wie in den Figuren beispielhaft gezeigt wird, sind der Vorratsbereich 25A, der Plattformbereich 17A und der Pulversammelbereich 29A nebeneinander in X-Richtung versetzt angeordnet und der Beschichter 23 ist in X-Richtung verschiebbar.

Der Fertigungsvorgang umfasst zusammenfassend ein wiederholtes Absenken der Bauplattform 17 im Bauzylinder 21, ein Aufbauen einer frischen Pulverschicht auf der Bauplattform 17 und ein Verschmelzen der Pulverschicht in dem Bereich, in dem das 3D-Bauteil 3 entstehen soll. Fig. 3 zeigt das teilweise fertiggestellte 3D-Bauteil 3, das in nicht verschmolzenem Pulver 5 eingebettet ist.

Ferner umfasst die Fertigungsvorrichtung 1 eine Kamera 31, die insbesondere auf den Plattformbereich 17A ausgerichtet ist und Bilddaten der Oberfläche des Pulverbetts (z.B. während der Fertigung des Laserbearbeitung) bereitstellen kann. Ferner kann die Fertigungsvorrichtung 1 ein Beleuchtungssystem 33 umfassen, das insbesondere eine ausreichende Ausleuchtung des Plattformbereichs 17A für kontraststarke Aufnahmen der Kamera 31 bereitstellt.

Wie eingangs erwähnt wurde, ist eine Ausrichtung der Bauplattform 17 zum Bereitstellen einer bzgl. der Bauplattform ausgerichteten Oberfläche des Pulverbetts gewünscht (beispielsweise eine horizontale Ausrichtung einer planen Bauplattform). Jedoch kann zu Beginn des Fertigungsvorgangs eine Verkippung der Bauplattform 17 z.B. durch Aufheizen der Plattform auf hohe Temperaturen, durch mechanische Einbautoleranzen oder auch durch Keilfehler, die beim Aufarbeiten der wiederverwendbaren Bauplattformen entstehen, vorliegen. Ferner wird üblicherweise die Position der Nulllage für jede Bauplattform 17 angepasst, da die Dicke der Bauplattform 17 z.B. durch mechanische Toleranzen und/oder durch Abtragen des Materials bei der bereits angesprochenen Wiederaufbereitung von Bauplattformen schwankt.

Eine Verkippung und/oder eine Nulllagenfehlpositionierung der Bauplattform 17 können zu einem Keilfehler bzw. einem Höhen-Offsetfehler in der Pulverstartschicht führen. Werden derartige Fehler z.B. wesentlich größer als eine Schichtdicke des SLM-Prozesses (typischerweise 20-50 µm), können Anbindungsfehler der Startschicht auftreten. Dies kann wiederum zum Ablösen oder zu Verformungen des Bauteils führen, mit entsprechendem Ausschuss durch unbrauchbare Bauteile, einer möglichen Beschädigung der Bauplattform 17 und/oder einer Beschädigung des gesamten Baujobs.

Hierin wird nun ein Konzept zur Detektion der Bauplattformverkippung und deren Nulllage vorgeschlagen, welches beispielsweise in ein Sensoriksystem integriert werden kann, das auf eigenen oder bereits vorhandenen Kamerasystemen aufbauen kann. Das Sensoriksystem ist dabei bevorzugt derart ausgebildet, dass es ferner einen Einstellvorgang der mechanischen Nivellierung der Bauplattform 17 und/oder ein Anfahren der bauplattformspezifischen Nulllage ermöglicht. Entsprechend umfasst die Fertigungsvorrichtung 1 eine Ausrichtvorrichtung 35 zum Positionieren des Trägers 19 bezüglich der Arbeitsfläche 27. Die Ausrichtvorrichtung 35 ist zum Einstellen einer Verkippung des Trägers 19 bezüglich der Arbeitsfläche 27 und optional zum Verschieben des Trägers 19 in seiner Höhe bezüglich der Arbeitsfläche 27 ausgebildet.

Das Sensoriksystem umfasst beispielsweise die Kamera 31, die Beleuchtungsvorrichtung 33 (optional), die Ausrichtvorrichtung 35 und eine Steuerungseinheit 37. Die Steuerungseinheit 37 kann Teil des Steuerungssystems der Fertigungsvorrichtung 1 sein oder als unabhängige Einheit spezifisch für ein Nivellieren und/oder ein Einstellen der Höhe des Trägers für eine spezifische auf diesem aufliegende Bauplattform 17 bezüglich der Arbeitsfläche 27 vorgesehen werden. In den Figuren 1 und 3 ist die Steuerungseinheit 37 schematisch gestrichelt angedeutet und über strichpunktierte Datenverbindungen 39 mit der Kamera 31, der Beleuchtungsvorrichtung 33 und der Ausrichtvorrichtung 35 verbunden.

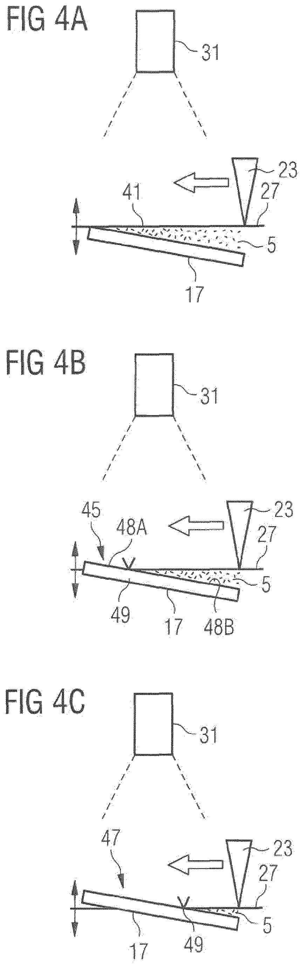

Die Figuren 4A bis 4C zeigen schematisch einen Messablauf, der auf einem Detektionssystem mit einem System zur optischen Abbildung der Bauplattform 17 (z.B. Kamera 31 mit Objektiv) und optional einer Beleuchtungseinheit 33 basiert. Im Rahmen des Messablaufs nimmt das Detektionssystem in einem iterativen Detektionsvorgang einen Bilderstapel des Bauplattformbereichs 17A auf. Allgemein umfasst der Messablauf mehrere Be- oder Entschichtungsvorgänge der Bauplattform 17, wobei die Bauplattform 17 zumindest teilweise in der Pulverschicht erkennbar wird. Zwischen einzelnen Be- oder Entschichtungsvorgängen wird die Höhe der Bauplattform 17 verfahren. Eine Bildverarbeitung des Bilderstapels wertet, wie nachfolgend erläutert, Verkippung und/oder Nullposition der Bauplattform 17 aus.

In den Figuren 4A bis 4C wird beispielhaft eine verkippte Bauplattform 17 in drei ansteigenden Höhenstellungen für drei Bilder des Bilderstapels gezeigt. Vor jeder Bildaufnahme wurde mit dem Beschichter 23 über den Plattformbereich 17A Pulver 5 verteilt, so dass die Oberflächen der Pulverschichten im Wesentlichen horizontal ausgebildet werden (eine entsprechende horizontale Ausrichtung der Bewegungsrichtung und der Unterkante des Beschichters 23 vorausgesetzt). Allerdings wirkt sich eine Verkippung auf das Ausmaß der Pulverschicht aus.

Die Sequenz der drei Höhenstellungen der Figuren 4A bis 4C ist beispielsweise Teil einer Ausführungsform eines iterativen Detektionsvorgangs, der auf einem iterativen Entschichten der Bauplattform 17 basiert.

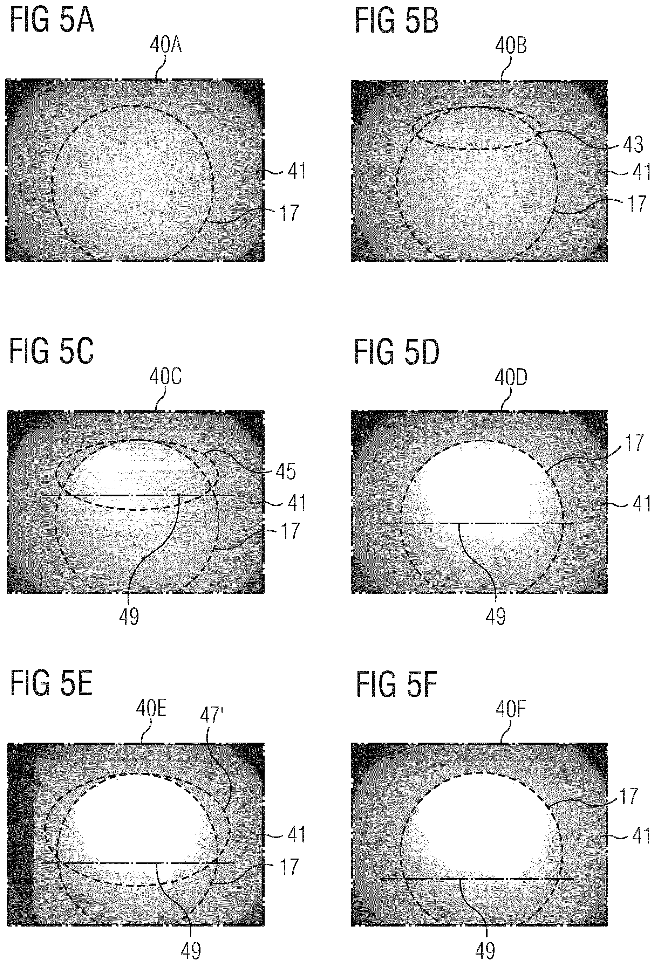

Fig. 4A zeigt die Bauplattform 17 in einer Ausgangshöhenstellung, in der die Bauplattform 17 deutlich tiefer als die geschätzte untere Grenze des Beschichters 23 abgesenkt wurde. Wird nun Pulver mit dem Beschichter 23 aufgetragen, ergibt sich eine vollständig geschlossene Pulverdecke über der Bauplattform 17, mit einer horizontalen Oberfläche 41 des Pulverbetts im Bereich des Sichtfelds der Kamera. Eventuell muss mehrmals beschichtet werden, um das gesamte Volumen oberhalb der Bauplattform 17 mit Pulver 5 zu befüllen. Erstreckt sich die Pulverdecke noch nicht vollständig über die Bauplattform, ist diese weiter abzusenken und nachzubeschichten. Fig. 5A zeigt ein entsprechendes Kamerabild des Pulverbetts. Man erkennt im Wesentlichen eine konturfreie und gleichmäßig erscheinende Oberseite 41 des Pulverbetts (ohne Durchscheinen der Bauplattform 17). Die dunklen Ecken der in den Figuren 5A bis 5F gezeigten Kamerabilder sind durch Vignetteneffekte der Kamera 31 bedingt. Die Bauplattform 17 ist in den Figuren 5A bis 5F mit einem gestrichelten Kreis angedeutet.

Nun wird die Bauplattform 17 mit einer Schrittweite von z.B. 50 µm angehoben und die entsprechende Pulverschichtdickendifferenz durch Verfahren des Beschichters 23 entfernt. Fig. 5B zeigt ein Kamerabild des Pulverbetts, bei dem in einem Bereich 43 erste Unregelmäßigkeiten im Erscheinungsbild der Oberseite 41 des Pulverbetts zu erkennen sind. Jedoch ist die Oberseite 41 des Pulverbetts im Wesentlichen noch gleichmäßig.

Wird die Bauplattform weiter angehoben ergibt sich z.B. die Situation der Fig. 4B, bei der ein kleiner Teil 45 der Bauplattform 17 oberhalb der durch den Beschichter 23 vorgegebenen Oberseite 41 des Pulverbetts liegt. Die Abziehbewegung des Beschichters 23 legt somit diesen kleinen Teil 45 frei. Fig. 5C zeigt ein Kamerabild des Pulverbetts, bei dem ein dem kleinen Teil 45 entsprechender Oberflächenbereich 45' heller ist als Pulver, da z.B. die Bauplattform 17 eingestrahltes Licht stärker reflektiert als das Pulver. Man erkennt somit eine größere Unregelmäßigkeit im Erscheinungsbild der Oberseite 41 des Pulverbetts.

Wird die Bauplattform 17 weiter angehoben (siehe die Kamerabilder 5D bis 5F), vergrößert sich der freigelegte Bereich solange bis die Bauplattform 17 vollständig entschichtet wurde.

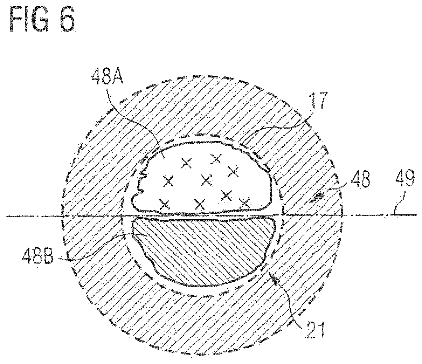

In Fig. 4C ist z.B. ein Großteil 47 der Bauplattform 17 freigelegt, entsprechend z.B. dem Kamerabild der Fig. 5E mit einem vergrößerten Oberflächenbereich 47'. Wie nachfolgend erläutert, kann eine Bildverarbeitung die Verkippung auf den freigelegten Bereichen 48A und den von Pulver bedeckten Bereichen 48B (schematisch angedeutet in Fig. 4B sowie der nachfolgend beschriebenen Fig. 6) bestimmen.

In einer weiteren Ausführungsform kann ein iterativer Detektionsvorgang z.B. auf iterativem Beschichten basieren. Dabei wird die Bauplattform 17 zunächst deutlich höher als die geschätzte untere Grenze des Beschichters 23 angehoben. Falls die Bauplattform 17 zunächst noch teil- oder vollbeschichtet wird, ist sie weiter anzuheben, wobei eine Kollision mit der Beschichter 23 auszuschließen ist, um z.B. weitere Dejustagen zu verhindern. Anschließend wird die Bauplattform 17 mit einer Schrittweite von z.B. einigen zehn µm abgesenkt und Pulver durch den Beschichter 23 nach und nach aufgetragen. Die Bauplattform 17 wird dabei zunächst zu einem kleinen Teil und dann zu immer größeren Teilen beschichtet. Die Entwicklung der nicht beschichteten Bereiche kann auch hier mit entsprechenden Kamerabildern aufgenommen und ausgewertet werden.

Bei beiden Ausführungsformen entstehen - als Beispiel eines Pulvergrenzverlaufs bei einer planen Bauplatte - Pulverabrisslinien 49, wenn sich Teilbereiche der Bauplattform 17 auf Höhe des Beschichters 23 befinden. Die Pulverabrisslinien 49 sind in den Figuren 4B und 4C mit Pfeilspitzen und in den Figuren 5C bis 5E mit strichpunktierten Linien angedeutet. Die Pulverabrisslinien 49 lassen sich basierend auf den erfassten Bilddaten gewinnen. Durch eine automatisierte Auswertung (Bildverarbeitung) der verschiedenen Pulverabrisslinien 49 lassen sich z.B. die Richtung und der Gradient der Verkippung der Bauplattform 17 detektieren. Die Stärke des Gradienten ergibt sich aus dem bekannten Verfahrweg (Hub) zwischen zwei Bildern. Die Nulllage lässt sich ferner z.B. durch eine Detektion einer vollständig entschichteten Bauplattform (z.B. nach mechanischer Nivellierung) oder durch Berechnung der Mittenlage aus dem Gradienten bestimmen.

Ferner sind die iterativen Detektionsvorgänge des iterativem Beschichtens und des iterativen Entschichtens auf jedwede Kipprichtung anwendbar, d.h., sie sind unabhängig davon, ob die Bauplattform in der, entgegen der oder schräg zur Bewegungsrichtung (Be-/Entschichtungsrichtung) verkippt ist.

Fig. 6 zeigt beispielhaft in einer Skizze den Informationsgehalt des Bildes 40D. Man erkennt einen kreisförmigen Bereich, der in seinen Außenmaßen durch das Sichtfeld der Kamera bestimmt wird. Pulver 5 ist im äußeren aufgenommenen Bereich und teilweise oberhalb des Bauzylinders 21 zu erkennen. Auch in der Skizze der Fig. 6 ist die Bauplattform 17 mit einem gestrichelten Kreis angedeutet. Der Durchmesser der Bauplattform 17 entspricht in dieser beispielhaften Ausführungsform nahezu dem des Bauzylinders 21. Der gestrichelte Kreis stellt somit die Abgrenzung der Baukammer 17/des Trägers 19 zur statischen Arbeitsfläche 27 (Prozesskammerboden) dar.

Das Niveau der Pulveroberfläche insbesondere innerhalb des Bauzylinders 21 entspricht der Oberfläche des Pulverbettes im Fertigungsprozess und der zuletzt aufgetragenen oder abgetragenen Schicht während des hierin offenbarten Bilderfassungsvorgangs. Das Niveau wird durch die untere Begrenzung des Schiebers 23 definiert und liegt üblicherweise im Wesentlichen auf der Höhe der Arbeitsfläche 27.

Analog zum Bild 40D der Fig. 5D erhebt sich ein Teil der Bauplattform 17 über das so definierte Niveau bzw. die Arbeitsfläche 27 aufgrund einer vorliegenden Verkippung der Oberfläche bzgl. der Arbeitsfläche 27, sei es durch eine Verkippung des Trägers 19, eine schräge Auflage der Bauplattform 17 auf dem Träger 19 oder eine asymmetrischen Form der Bauplattform 17.

Nachdem in Rahmen des hierin offenbarten Bilderfassungsvorgangs der Träger auf die aktuell vorliegende Höhe verschoben wurde, erfolgte ein Auftragen einer Pulverschicht, falls die Höheneinstellung auf einem Absenken des Trägers 19 beruhte, oder es erfolgte ein Abtragen einer Pulverschicht, falls die Höheneinstellung auf einem Anheben des Trägers 19 beruhte. In beiden Fällen bildet sich über der Bauplattform 17 ein von Pulver befreiter Bereich 48A und ein mit Pulver bedeckter Bereich 48B aus, zwischen denen sich ein im Wesentlichen linearer Pulvergrenzverlauf 48 ergibt. Der Pulvergrenzverlauf 48 ist der abhängig vom Neigungswinkel der Substratplatte wandernde Grenzverlauf zwischen Pulver auf der Bauplattform 17 und der blanken Arbeitsfläche 27. Dem Pulvergrenzverlauf 48 kann eine linienförmige Übergangszone, insbesondere die Pulverabrisslinie 49 (strichpunktiert), zugeordnet werden. Die Orientierung des Pulvergrenzverlaufs 48 wird durch die Kippachse definiert, der Abstand zwischen Pulvergrenzverläufen bei bekanntem Höhenunterschied definiert den Kippwinkel und der Verlauf der Pulvergrenzverlauf bezüglich des Zentrums lässt auf die angestrebte Nulllage zurückschließen.

Basierend auf der gewonnenen Information (Kippwinkel, Kippachse und/oder Nulllage) kann eine Ausrichtvorrichtung des Trägers der Bauplattform angesteuert werden. Über die Ausrichtung des Trägers wird entsprechend auch die Bauplattform im Niveau ausgerichtet.

In einer Weiterbildung kann ferner basierend auf der Auswertung des Pulvergrenzverlaufs, insbesondere der zugeordneten Pulverabrisslinien 49, eine Abweichung der Oberfläche der Bauplattform von einer idealen Ausrichtung/idealen Ebene bestimmt werden. Die Erkennung von derartigen außerhalb eines Toleranzbereichs liegenden Freiformfehlern kann es erlauben z.B. mechanische Bearbeitungsfehler von Bauplattformen zu detektieren und somit den Beginn des Aufbauens eines 3D-Bauteils auf einer fehlerhaften Bauplattform zu vermeiden.

Allgemein kann für die Bildaufnahme die üblicherweise bereits vorhandene Pulverbettüberwachungskamera und die in der Gehäusedecke vorgesehene Beleuchtung verwendet werden.

Allgemein ist es ein Aspekt der Bildverarbeitung, Position und Orientierung der Pulverabrisslinie zur erkennen, wobei möglicherweise auftretende Artefakte, wie z.B. ein "Ausfransen" der Abrisslinie, welche durch variierende Bürstenlängen oder Flecken auf der Substratplatte entstehen können, auszugleichen sind.

Beispielhafte Ausführungsformen des Beschichters 23 umfassen Bürstenbeschichter wie eine Kohlefaserbürste oder Beschichter mit weichen Beschichterlippen. Mit derartigen Beschichtern kann eine Auflösung der Verkippungsdetektion von kleiner 20% der Bauplattformbreite erreicht werden, wodurch entsprechend eine Höhenauflösung von ca. 30 µm möglich wird. So hängt die Auflösung im Wesentlichen von der "Streifenbildung" beim Abriss des Pulverfilms ab, welche wiederum zum Teil vom Zustand des Beschichters 23, insbesondere seiner die Oberfläche des Pulverbetts bestimmenden Unterkante wie dem Zustand der Bürstenhaare abhängt.

Allgemein sind die hierin vorgeschlagenen Konzepte auf verschiedene Typen und Zustände von Bauplattformen, wie geschliffene Substratplatten, ältere/mehrfach genutzte Substratplatten und Substratplatten mit strukturellen Markierungen oder benutzungsbedingten Formänderungen durch z.B. abgescherte Bauteile, einsetzbar.

Ferner kann die Bildverarbeitung insbesondere hinsichtlich des zu detektierenden Kontrasts auf die Oberfläche und das Material der Bauplattform sowie auf das Pulvermaterial angepasst werden. Ferner kann die Bildverarbeitung auf Hell- und Dunkelfeldbeleuchtung angepasst werden.

Hub-Schrittweiten liegen üblicherweise im Bereich der Höhenauflösung und lassen sich ferner an die verwendeten Plattengrößen anpassen. Beispielhafte Hub-Schrittweiten liegen im Bereich von 10 µm bis 100 µm, beispielsweise 30 µm oder 50 µm.

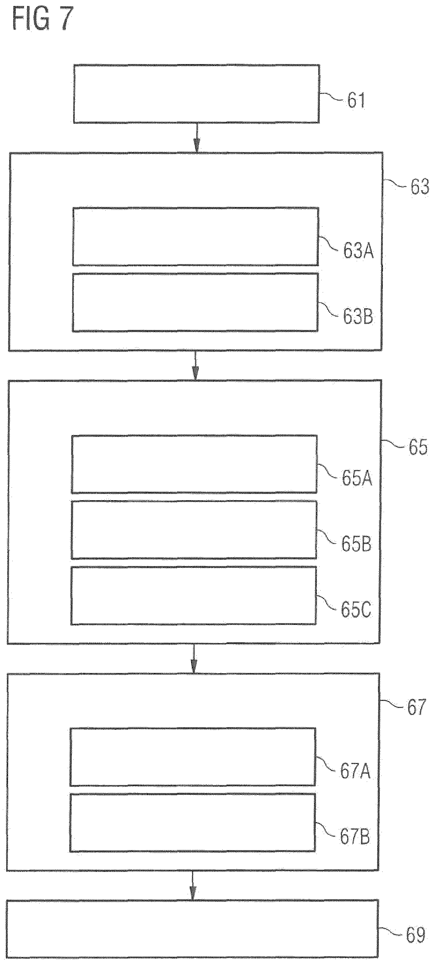

Zusammenfassend wird in Verbindung mit Fig. 7 ein beispielhafter Ablauf des hierin offenbarten Verfahrens zum Erzeugen eines Steuersignals zur Positionierung eines in der Höhe bezüglich einer Arbeitsfläche verfahrbaren Trägers einer Fertigungsvorrichtung zusammengefasst.

In einem Schritt 61 wird eine Bauplattform auf dem Träger angeordnet. Die Positionierung des Trägers soll nun spezifisch für diese aufgelegte Bauplattform erfolgen. Dazu wird im Schritt 63 eine Mehrzahl von Bildern der Arbeitsfläche im Bereich des Trägers erfasst, wobei vor dem Erfassen eines der Mehrzahl von Bildern jeweils eine bildspezifische Höhe des Trägers eingestellt wird. Überdies wird je nach Änderungsrichtung in der Höhe eine Pulverschicht aufgetragen oder abgetragen. Die sich dann ergebende Oberfläche wird z.B. mit einer Kamera erfasst. Für mindestens zwei der Mehrzahl von Bildern wird in Schritt 65 ein Pulvergrenzverlauf (beispielsweise durch eine (Differenz-)Bildverarbeitung) bestimmt, der sich zwischen einem von Pulver befreiten und einem von Pulver bedeckten Bereich der Bauplattform ausgebildet hat. Die Bilder werden für unterschiedlich eingestellte bildspezifische Höhen des Trägers erfasst. Ein Steuersignal zur Positionierung des Trägers wird dann basierend auf den mindestens zwei Pulvergrenzverläufen erzeugt (Schritt 67). Das derart erzeugte Steuersignal wird von der Ansteuereinheit empfangen, die dann den Träger gemäß dem Steuersignal ausrichtet (Schritt 69).

Der Pulvergrenzverlauf kann durch Vergleichen der Bilder untereinander und/oder durch Vergleichen mindestens eines der Bilder mit einem Referenzbild von einer vollständig geschlossenen Pulverschicht bestimmt werden (Schritt 63A). Optional kann in einem Schritt 63B ein Bild mit einer vollständig geschlossenen Pulverschicht als Referenzbild erzeugt werden.

In einem Schritt 65A wird ein Kippwinkel aus den relativen Lagen mindestens zweier Pulvergrenzverläufe bestimmt. So kann beispielsweise eine Entfernung zwischen zwei Pulvergrenzverläufen in der Ebene der Arbeitsfläche bestimmt werden und daraus und aus der zugehörigen Höhenänderung der Kippwinkel berechnet werden. Ferner kann im Schritt 65B eine Kippachsenrichtung in der Arbeitsfläche aus mindestens einem der mindestens zwei bestimmten Pulvergrenzverläufe bestimmt werden. Ferner kann ergänzend oder alternativ im Schritt 65C einer Nulllage aus mindestens einem der mindestens zwei bestimmten Pulvergrenzverläufe bestimmt werden, wobei in der Nulllage die Oberseite der Bauplattform in der Ebene der Arbeitsfläche liegen soll. Die Nulllage kann aus mindestens einer bildspezifischen Höhe des Trägers bestimmt wird, bei der der zugehörige mindestens eine Pulvergrenzverlauf zentrumsnah über die Bauplattform verläuft oder bei der - nach erfolgter Ausrichtung und wiederholtem Bilderfassen verschiedener Höhen - kein Pulver mehr auf der Bauplattform liegt.

Als Steuersignal zur Positionierung wird in Schritt 67A z.B. ein Kippwinkelsteuersignal an eine Ausrichteinheit des Trägers ausgegeben, das eine dem berechneten Kippwinkel entgegengesetzte Verkippung des Trägers um die bestimmte Kippachsenrichtung bewirkt. Ferner kann als Schritt 67B ein Nulllageneinstellsignal als Steuersignal zur Positionierung an die Ausrichteinheit des Trägers ausgegeben werden, das ein Verschieben des Trägers in eine der Nulllage zugeordnete Höhe bewirkt.

Alternativ zur Erzeugung der Bilddaten mit einer Kamera können die auszuwertenden Bilder mit einem Punkt-/Zeilensensor oder Scannersystem gewonnen werden. Als Scannersystem kann beispielsweise der Scanner des Arbeitslasers der Fertigungsvorrichtung verwendet werden, wobei Gesamtbilder aus Subbildern/Punkten zusammengesetzt werden. Ferner kann das Bild auch durch mechanisches Verfahren und Zusammensetzen der Daten eines Punkt-/Zeilensensor oder Kamera erzeugt werden, z.B. durch Verfahren des Sensorsystems mit dem Beschichter.

Die hierin offenbarten Konzepte lassen sich des Weiteren auf (z.B. konkav oder konvex) gekrümmte Oberflächen erstrecken, wobei sich die Formgebung des zu erkennenden Pulvergrenzverlaufs dann z.B. nicht-linear erstreckt. Derartige Oberflächenformen können beispielsweise bei einem ergänzenden LMF-Aufbau auf einem bereits teilweise vorgefertigten Bauteil vorliegen. Ferner können derartige Verformungen bei der Nach-/ Überarbeitung von Bauplattformen entstehen. Bei einer Verkippung einer derartigen Oberflächenform verschiebt sich der Pulvergrenzverlauf bei verschiedenen Höheneinstellungen aber ebenfalls über die Bauplattform.

## Patentansprüche

1. Verfahren zum Erzeugen eines Steuersignals zur Positionierung eines in der Höhe bezüglich einer Arbeitsfläche (27) verfahrbaren Trägers (19) einer Fertigungsvorrichtung (1), wobei die Fertigungsvorrichtung (1) zur generativen Fertigung eines dreidimensionalen Bauteils (3) aus einem Pulver (5) ausgebildet ist, mit den Schritten:
Anordnen der Bauplattform (17) auf dem Träger (19),
Erfassen einer Mehrzahl von Bildern (40A-40F) der Arbeitsfläche (27) im Bereich des Trägers (19), wobei vor dem Erfassen eines der Mehrzahl von Bildern eine bildspezifische Höhe des Trägers (19) eingestellt und je nach Änderungsrichtung in der Höhe eine Pulverschicht aufgetragen oder abgetragen wird,
Bestimmen eines Pulvergrenzverlaufs (48) zwischen einem von Pulver befreiten Bereich (48A) und einem von Pulver bedeckten Bereich (48B) der Bauplattform (17) für mindestens zwei der Mehrzahl von Bildern (40A-40F), die für unterschiedlich eingestellte bildspezifische Höhen des Trägers (19) erfasst wurden, und
Erzeugen eines Steuersignals zur Positionierung des Trägers (19) basierend auf den mindestens zwei Pulvergrenzverläufen (48).

2. Verfahren nach Anspruch 1, wobei der Pulvergrenzverlauf für ein Bild der Mehrzahl von Bildern durch Bilderverarbeiten des Bildes erfolgt und dem Pulvergrenzverlauf (48) eine durch eine Bauplattformgeometrie bedingte Übergangszone, insbesondere eine Pulverabrisslinie (49), zugeordnet wird.

3. Verfahren nach Anspruch 1 oder 2, ferner mit Bestimmen des Pulvergrenzverlaufs (48) durch Vergleichen der Bilder untereinander und/oder durch Vergleichen oder Differenzbilderzeugung mindestens eines der Bilder mit einem Referenzbild von einer vollständig geschlossenen Pulverschicht und optional ferner mit
Erfassen des Bildes mit einer vollständig geschlossenen Pulverschicht als Referenzbild.

4. Verfahren nach einem der vorhergehenden Ansprüche, wobei sich der Pulvergrenzverlauf (48) nach Be- bzw. Entschichten mit einem Beschichter (23) bei unterschiedlich eingestellten Höhen des Trägers (19) entsprechend einer bezüglich der Arbeitsfläche (27) vorliegenden Verkippung der Oberseite der Bauplattform (17) verschiebt, und das Verfahren ferner aufweist Bestimmen eines Kippwinkels aus den relativen Lagen mindestens zweier Pulvergrenzverläufe (48), und wobei das Verfahren ferner optional aufweist
Bestimmen einer Entfernung zwischen zwei Pulvergrenzverläufen (48) in der Ebene der Arbeitsfläche (27) und
Berechnen eines Kippwinkels aus der bestimmten Entfernung und der zugehörigen Höhenänderung.

5. Verfahren nach einem der vorhergehenden Ansprüche, ferner mit
Bestimmen einer Kippachsenrichtung in der Arbeitsfläche (27) aus mindestens einem der mindestens zwei bestimmten Pulvergrenzverläufe (48).

6. Verfahren nach einem der vorhergehenden Ansprüche, ferner mit
Ausgeben eines Kippwinkelsteuersignals, als Steuersignal zur Positionierung, an eine Ausrichteinheit des Trägers (19), das eine dem berechneten Kippwinkel entgegengesetzte Verkippung des Trägers (19) um die bestimmte Kippachsenrichtung bewirkt.

7. Verfahren nach einem der vorhergehenden Ansprüche, ferner mit
Bestimmen einer Nulllage aus mindestens einem der mindestens zwei bestimmten Pulvergrenzverläufe (48), wobei in der Nulllage die Oberseite der Bauplattform (17) in der Ebene der Arbeitsfläche (27) liegt oder
Bestimmen, nach erfolgter Kompensation einer Verkippung, der Höhe eines Bildes einer erneut erzeugten Sequenz von Bildern, bei der sich der von Pulver befreite Bereich über die ganze Bauplattform erstreckt.

8. Verfahren nach Anspruch 7, wobei die Nulllage aus mindestens einer bildspezifischen Höhe des Trägers (19) bestimmt wird, bei der der zugehörige mindestens eine Pulvergrenzverlauf zentrumsnah über die Bauplattform (17) verläuft.

9. Verfahren nach einem der Ansprüche 7 oder 8, wobei der Träger (19) in seiner Höhe bezüglich der Arbeitsfläche (27) derart eingestellt wird, dass nach einer Kippung gemäß einem Kippwinkelsteuersignal die Oberseite der Bauplattform (17) in der Ebene der Arbeitsfläche (27) liegt.

10. Verfahren nach einem der Ansprüche 7 bis 9, ferner mit
Ausgeben eines Nulllageneinstellsignals, als Steuersignal zur Positionierung, an eine Ausrichteinheit des Trägers (19), das ein Verschieben des Trägers (19) in eine der Nulllage zugeordnete Höhe bewirkt.

11. Verfahren nach einem der vorhergehenden Ansprüche, wobei, je nachdem ob eine Höhendifferenz zur Arbeitsfläche (27) vergrößert oder verkleinert wurde, eine Pulverschicht be- oder entschichtet wird.

12. Verfahren nach einem der vorhergehenden Ansprüche, wobei die Mehrzahl von Bildern der Arbeitsfläche (27) in einem iterativen Detektionsvorgang erfasst wird, bei dem iterativ mehrere Be- oder Entschichtungsvorgänge der Bauplattform (17) vorgenommen werden und zwischen einzelnen Be- oder Entschichtungsvorgängen eine Höhe des Trägers (19) um vorbestimmte Höhenänderungen verändert wird, wobei der Bereich der eingestellten Höhen derart ausgewählt ist, dass zumindest bei einigen der Mehrzahl von Bildern die Bauplattform (17) zumindest teilweise in der Pulverschicht erkennbar ist, insbesondere aus dieser herausragt.

13. Fertigungsvorrichtung (1) zur generativen Fertigung eines dreidimensionalen Bauteils (3) aus einem Pulver (5) mit
einem eine Arbeitsfläche (27) bereitstellenden Fertigungsraum (9), der einen Plattformbereich (17A) umfasst,
einem Bauzylinder (21), der einen in der Höhe verfahrbaren Träger (19) aufweist, auf dem das dreidimensionale Bauteil (3) auf einer Oberfläche einer Bauplattform (17) schichtweise hergestellt werden soll,
einer Ausrichtvorrichtung (35) zum Positionieren des Trägers (19) bezüglich der Arbeitsfläche (27),
einer Schiebevorrichtung (19) zum Be- und/oder Entschichten von Pulver im Plattformbereich (17A),
einer Bilderzeugungsvorrichtung zur Gewinnung von Bilddaten des Plattformbereichs (B17A) und
eine Steuerungseinheit (37), die zum Empfangen der Bilddaten mit der Bilderzeugungsvorrichtung und zum Einstellen der Höhe und der Ausrichtung des Trägers (19) mit der Ausrichtvorrichtung (35) verbunden ist, und ferner zum Auswerten der Bilddaten nach einem Verfahren gemäß einem der Ansprüche 1 bis 12 ausgebildet ist.

14. Fertigungsvorrichtung (1) nach Anspruch 13, wobei die Ausrichtvorrichtung (35) zum Verschieben des Trägers (19) in seiner Höhe bezüglich der Arbeitsfläche (27) und/oder zum Einstellen einer Verkippung des Trägers (19) bezüglich der Arbeitsfläche (27) ausgebildet ist und
der Beschichter (23) ein Bürstenbeschichter oder ein Beschichter mit einer weichen Beschichterlippe ist.

15. Fertigungsvorrichtung (1) nach Anspruch 13 oder 14, ferner mit
einer Kamera (31) als Bilderzeugungsvorrichtung und/oder
einer Beleuchtungsvorrichtung (33) zum Beleuchten des Plattformbereichs (17A) und optional
einem Bestrahlungssystem (15) zur Erzeugung eines Strahls für die Bestrahlung von Pulver (5) im Plattformbereich (17A) zum schichtweisen Herstellen des dreidimensionalen Bauteils (3).

## Claims

1. A method for generating a control signal for positioning a substrate (19) of a manufacturing device (1), which can be height-adjusted in relation to a working surface (27), wherein the manufacturing device (1) is designed for additive manufacturing of a three-dimensional component (3) from powder (5), comprising the steps:
arranging the building platform (17) on the substrate (19),
capturing a plurality of images (40A-40F) of the working surface (27) in the region of the substrate (19), wherein an image-specific height of the substrate (19) is adjusted before capturing one of the plurality of images and depending on the direction of change in height, a powder layer is applied or removed,
determining a powder boundary line (48) between a powder-free region (48A) and a powder-covered region (48B) of the building platform (17) for at least two of the plurality of images (40A-40F), which have been captured for differently adjusted image-specific heights of the substrate (19); and
producing a control signal for positioning the substrate (19) based on the at least two powder boundary lines (48).

2. The method according to claim 1, wherein the powder boundary line is achieved for an image of the plurality of images by image processing of the image, and the powder boundary line (48) is assigned a transition zone caused by a building platform geometry, in particular a powder tear-off line (49).

3. The method according to claim 1 or 2, further comprising
determining the powder boundary line (48) by comparing the images amongst one another and/or by comparing or difference image generation of at least one of the images with a reference image of a completely closed powder layer, and optionally further comprising
capturing the image with a completely closed powder layer as reference image.

4. The method according to any one of the preceding claims, wherein the powder boundary line (48) moved after layer application and/or layer removing with a coater (23) with differently adjusted heights of the substrate (19) according to a tilting of the upper side of the building platform (17) present in relation to the working surface (27), and the method further comprises
determining a tilt angle from the relative positions of at least two powder boundary lines (48), and wherein the method further optionally comprises
determining a distance between two powder boundary lines (48) in the plane of the working surface (27), and
calculating a tilt angle from the determined distance and the respective change in height.

5. The method according to any one of the preceding claims, further comprising
determining a tilt axis direction in the work surface (27) from at least one of at least two determined powder boundary lines (48).

6. The method according to any one of the preceding claims, further comprising
outputting a tilt angle control signal, as a control signal for positioning, to an alignment unit of the substrate (19), which causes a tilting of the substrate (19) around the determined tilt axis direction that is opposite to the calculated tilt angle.

7. The method according to any one of the preceding claims, further comprising
determining a zero position from at least one of the at least two determined powder boundary lines (48), wherein in the zero position the upper side of the building platform (17) lies in the plane of the working surface (27), or
determining, after compensation for tilt, the height of an image in a newly produced sequence of images in which the powder-free region extends over the entire building platform.

8. The method according to claim 7, wherein the zero position is determined from at least one image-specific height of the substrate (19), in which the respective at least one powder boundary line runs close to the center over the building platform (17).

9. The method according to any one of claims 7 or 8, wherein the substrate (19) is adjusted in its height relative to the working surface (27) in such a manner that after a tilting according to a tilt angle control signal, the upper side of the building platform (17) lies in the plane of the working surface (27).

10. The method according to any one of claims 7 to 9, further comprising
outputting a zero position adjusting signal, as control signal for positioning, to an alignment unit of the substrate (19), which causes a shift of the substrate (19) into a height assigned to the zero position.

11. The method according to any one of the preceding claims, wherein depending on whether a height difference to the working surface (27) was increased or reduced, a powder layer is applied ore removed.

12. The method according to any one of the preceding claims, wherein the plurality of images of the working surface (27) is captured in an iterative detection process, in which iteratively several layer applying or layer removing processes of the building platform (17) are performed, and between individual layer applying or layer removing processes a height of the substrate (19) is changed by pre-determined height variations, wherein the region of the adjusted heights is selected in such a manner that at least in some of the plurality of images the building platform (17) can be identified at least partially in the powder layer, in particular projects from this.

13. A manufacturing device (1) for the additive manufacturing of a three-dimensional component (3) from powder (5), comprising
a manufacturing chamber (9) providing a working surface (27), which includes a platform region (17A),
a building cylinder (21) which includes a height-adjustable substrate (19) on which the three-dimensional component (3) is to be manufactured in layers on a surface of a building platform (17),
an alignment device (35) for positioning the substrate (19) relative to the working surface (27),
a sliding device (19) for applying or removing a layer of powder in the platform region (17A),
an image generating device for obtaining image data of the platform region (B17A); and
a control unit (37) which is connected with the image generating device for receiving the image data and with the alignment device (35) for adjusting the height and alignment of the substrate (19), and is further configured for evaluating the image data according to a method according to any one of claims 1 to 12.

14. The manufacturing device (1) according to claim 13, wherein the alignment device (35) is configured for shifting the substrate (19) in its height relative to the working surface (27) and/or for adjusting a tilt of the substrate (19) relative to the working surface (27), and the coater (23) is a brush coater or a coater with a soft coater lip

15. The manufacturing device (1) according to claim 13 or 14, further comprising:
a camera (31) as an image generating device, and/or
an illuminating device (33) for illuminating the platform region (17A), and optionally
an irradiation system (15) for generating a beam for irradiating powder (5) in the platform region (17A) for a layer-wise production of the three-dimensional component (3).

## Revendications

1. Procédé de production d'un signal de commande pour le positionnement d'un support (19) déplaçable dans la hauteur par rapport à une surface de travail (27) d'un dispositif de fabrication (1), sachant que le dispositif de fabrication (1) est constitué pour la fabrication additive d'un composant tridimensionnel (3) à partir d'une poudre (5), avec les étapes de :
mise en place de la plateforme de construction (17) sur le support (19),
saisie d'une pluralité d'images (40A-40F) de la surface de travail (27) dans la zone du support (19), sachant qu'avant la saisie d'une de la pluralité d'images, une hauteur spécifique à l'image du support (19) est réglée et une couche de poudre est appliquée ou enlevée selon la direction de modification dans la hauteur,
détermination d'un profil de limite de poudre (48) entre une zone libérée de poudre (48A) et une zone couverte de poudre (48B) de la plateforme de construction (17) pour au moins deux des nombreuses images (40A-40F), qui ont été saisies pour des hauteurs de réglage différent du support (19), et
production d'un signal de commande pour le positionnement du support (19) en se basant sur au moins deux profils limites de poudre (48).

2. Procédé selon la revendication 1, sachant que le profil de limite de poudre pour une image de la pluralité d'images a lieu par traitement d'image de l'image et une zone de transition conditionnée par une géométrie de la plateforme de construction, en particulier une ligne de détachement de la poudre (49) est, est attribuée au profil de limite de poudre (48).

3. Procédé selon la revendication 1 ou 2, avec en plus détermination du profil de limite de poudre (48) par comparaison des images entre elles et/ou par comparaison ou production différentielle d'images d'au moins une des images avec une image de référence d'une couche de poudre complètement fermée et en option en plus avec saisie de l'image avec une couche de poudre complètement fermée en tant qu'image de référence.

4. Procédé selon l'une quelconque des revendications précédentes, sachant que le profil de limite de poudre (48) se déplace après application ou enlèvement d'une couche avec un enducteur (23) à des hauteurs de réglage différent du support (19) selon un basculement existant eu égard à la surface de travail (27) de la face supérieure de la plateforme de construction (17) et le procédé comporte en plus en option
la détermination d'un angle de basculement à partir des positions relatives d'au moins deux profils de limite de poudre (48) et sachant que le procédé comporte en plus en option
la détermination d'une distance entre deux profils limites de poudre (48) dans le plan de la surface de travail (27) et
le calcul d'un angle de basculement à partir de la distance déterminée et de la modification de hauteur correspondante.

5. Procédé selon l'une quelconque des revendications précédentes avec en plus détermination d'une direction d'axe de basculement dans la surface de travail (27) à partir d'au moins un des deux profils de limite de poudre déterminés (48).

6. Procédé selon l'une quelconque des revendications précédentes avec en plus émission d'un signal de commande d'angle de basculement en tant que signal de commande pour le positionnement, sur une unité d'orientation du support (19), qui entraîne un basculement du support (19), opposé à l'angle de basculement calculé, autour de la direction d'axe de basculement déterminée.

7. Procédé selon l'une quelconque des revendications précédentes avec en plus
détermination d'une position zéro à partir d'au moins un des au moins deux profils de limite de poudre déterminés (48), sachant que dans la position zéro, la face supérieure de la plateforme de construction (17) se situe dans le plan de la surface de travail (27) ou détermination, après compensation effectuée d'un basculement, de la hauteur d'une image d'une séquence nouvellement produite d'images, pour laquelle la zone libérée de poudre s'étend sur toute la plateforme de construction.

8. Procédé selon la revendication 7, sachant que la position zéro est déterminée à partir d'au moins une hauteur spécifique à l'image du support (19), à laquelle passe au moins un profil de limite de poudre correspondant proche du centre sur la plateforme de construction (17).

9. Procédé selon l'une quelconque des revendications 7 ou 8, sachant que le support (19) est réglé dans sa hauteur eu égard à la surface de travail (27) de telle manière qu'après un basculement selon un signal de commande d'angle de basculement, la face supérieure de la plateforme de construction (17) se situe dans le plan de la surface de travail (27).

10. Procédé selon l'une quelconque des revendications 7 à 9 avec en plus émission d'un signal de réglage de position zéro, en tant que signal de commande pour le positionnement, sur une unité d'orientation du support (19), qui entraîne un déplacement du support (19) dans une hauteur attribuée à la position zéro.

11. Procédé selon l'une quelconque des revendications précédentes, sachant qu'une couche de poudre est appliquée ou enlevée selon le cas où une différence de hauteur par rapport à la surface de travail (27) a été augmentée ou réduite.

12. Procédé selon l'une quelconque des revendications précédentes, sachant que la pluralité d'images de la surface de travail (27) est saisie dans une opération de détection itérative, pour laquelle plusieurs opérations d'application ou d'enlèvement de couche de la plateforme de construction (17) sont réalisées de façon itérative et une hauteur du support (19) est modifiée des modifications de hauteur prédéfinies entre les opérations d'application et d'enlèvement de couche individuelles, sachant que la zone des hauteurs réglées est sélectionnée de telle manière que la plateforme de construction (17) peut au moins en partie être identifiée dans la couche de poudre au moins pour plusieurs de la pluralité d'images, en particulier dépasse de celles-ci.

13. Dispositif de fabrication (1) pour la fabrication additive d'un composant tridimensionnel (3) à partir d'une poudre (5) avec
un espace de fabrication (9) offrant une surface de travail (27), qui comprend une zone de plateforme (17A), un cylindre de construction (21), qui comporte un support (19) déplaçable dans la hauteur, sur lequel le composant tridimensionnel (3) doit être fabriqué couche par couche sur une surface d'une plateforme de construction (17),
un dispositif d'orientation (35) pour positionner le support (19) eu égard à la surface de travail (27),
un dispositif de déplacement (19) pour appliquer et/ou enlever des couches de poudre dans la zone de plateforme (17A),
un dispositif de production d'images pour l'acquisition de données d'image de la zone de plateforme (B17A) et une unité de commande (37) qui est reliée au dispositif de production d'images dispositif pour la réception des données d'images et au dispositif d'orientation (35) pour le réglage de la hauteur et de l'orientation du support (19) et est constituée en plus selon le procédé selon l'une quelconque des revendications 1 à 12 pour l'exploitation des données d'images.

14. Dispositif de fabrication (1) selon la revendication 13, sachant que le dispositif d'orientation (35) est constitué pour déplacer le support (19) dans sa hauteur eu égard à la surface de travail (27) et/ou pour régler un basculement du support (19) eu égard à la surface de travail (27),
et
l'enducteur (23) est un enducteur à balais ou un enducteur avec une lèvre d'enduction molle.

15. Dispositif de fabrication (1) selon la revendication 13 ou 14 avec en plus
une caméra (31) en tant que dispositif de production d'images et/ou
un dispositif d'éclairage (33) pour éclairer la zone de plateforme (17A), et en option
un système d'irradiation (15) pour produire un rayon pour l'irradiation de la poudre (5) dans la zone de plateforme (17A) pour la fabrication couche par couche du composant tridimensionnel (3).
